# EUROPEAN PATENT SPECIFICATION

(11) **EP 2 027 990 B1**
(45) Date of publication and mention of the grant of the patent: **18.09.2013**
(21) Application number: 08162592.3
(22) Date of filing: 19.08.2008
(51) Int. Cl.: B29C 63/00, B27D 5/00

(54) **Method for surface treatment of a tile of compressed fibre material**
Verfahren zur Oberflächenbehandlung einer Platte aus komprimiertem Fasermaterial
Procédé pour traiter la surface d'un panneau compressée en fibres

(30) Priority: 21.08.2007 SE 0701882
(43) Date of publication of application: 25.02.2009
(73) Proprietor: Internia Fastighets Aktiebolag, 260 61 Hyllinge (SE)
(72) Inventor: Wilkens, Jan, SE-263 39 Höganäs (SE)
(74) Representative: Åkesson, Sten Jan-Åke

(56) References cited:
- DE-A1- 19 615 879
- DE-A1-102005 038 734
- GB-A- 2 081 642
- US-A- 4 175 149

## Description

### Technical Field

The present invention relates to a method for surface treatment of a tile of compressed fibre material, such as mineral wool, said tile being intended for use in interior wall systems, suspended ceiling systems or the like, and comprising a front side, intended to be facing a room, a rear side and one or more side edges.

### Background Art

Suspended ceilings can be installed in many different types of buildings for various reasons, for example to absorb sound, to reflect light, to lower the ceiling height or to hide installations such as ventilation ducts or wiring. The ceilings comprise tiles and a supporting structure. The supporting structure normally comprises supporting profiles, which are arranged in a grid defining compartments for individual tiles or groups of tiles. To obtain a relatively lightweight ceiling with satisfactory sound absorption, the tiles, for instance, may be made of a mineral wool material.

The tiles have a front side, intended to be facing a room, a rear side, arranged opposite the front side, and one or more side edges.

When manufacturing tiles of this kind a sheet of mineral wool is cut to the desired tile dimensions with respect to thickness, width and length. The front side may then be smoothed to obtain the desired surface structure. The side edges of the tile may be worked so as to obtain a shape that matches the intended ceiling system. Different ceiling systems require different side edge shapes. One or more layers of paint is/are applied on the front side of the tile. The paint is applied, for instance, by spraying or roller-coating the paint onto the surface.

One or more layers of paint is/are applied also on the side edges of the tile. The paint is applied, for instance, by spraying or roller-coating the paint onto the surface.

The surface structure, the paint on the underside of the tile, the paint on the side edges of the tile as well as the mineral wool may all be adapted so as to obtain properties which improve the acoustic and light qualities of a room.

When mounting the tiles of a suspended ceiling system, the tiles that abut on the walls almost always have to be cut in conjunction with mounting. This is also the case when the ceiling abuts on other installations, such as columns, differences in level and the like. The tiles can be easily cut when mounting, either cut straight or given a rebated and/or bevelled shape to form new bearing edges or enable aesthetically appealing connections, for example to walls. The exposed, newly formed side edge surface is painted before the tile can be mounted.

Painting of the edges is also carried out when required to prevent fibres or particles from coming loose from the cut edge.

It has been found that painting cut edges on site is time-consuming. The cut tile cannot be mounted until the paint has dried. To protect the environment, only water-dilutable paints are used, which means long drying times, in particular when working in unheated or poorly heated premises, as is often the case when ceilings are installed. When painting on absorbing materials, such as mineral wool, a tile edge that is visible after mounting has to be painted twice to ensure a satisfactory appearance.

Ceilings are often installed from scaffolding. The fact that the ceiling cannot be finished at once is a drawback, and a consequence of the method involving cutting and painting of a side edge and the subsequent drying thereof is that the scaffolding must be moved back for final mounting of the cut, painted and dried tile. This is time-consuming and expensive.

DE 196 15 879 discloses a process for manufacturing a plate for furniture in a single machine. The edge of the plate is machined, and a cover element, made of genuine wood, a wood-like material, a wood-like carrier with coating, plastic, cellulose and/or paper, is glued to the edge. Any protruding parts of the cover element is cut off, and an abrasive belt may be used to achieve a desired shape of the edge. In a final step, the plate is covered by a cover sheet consisting of a flexible impregnated paper, of polymeric film, PVC, polymethylmethacrylate, or polypropylene etc.

DE 10 2005 038 734 discloses a multi-layered wood material forming a plate. The plate has a middle layer made of a chipboard. Cover layers made of a fiberboard or a laminated material are attached to the middle layer. The cover layers are glued to the middle layer by means of an adhesive.

GB 2 081 642 describes an apparatus and a method for adhering a band or tape of veneer to a edge surface of a board. The band of veneer is attached to the edge surface by means of an adhesive. An object of GB 2 081 642 is to avoid that the tape adheres to rollers of the apparatus before adhering to the board.

### Summary of the Invention

In view of the above, it is an object of the present invention to provide a method that facilitates the manufacturing of a tile. A further object of the invention is to provide a method that facilitates the installation of a suspended ceiling system, interior wall system or the like.

To achieve these objects, and further objects that will be apparent from the following description, a method as defined in claim 1 is provided in accordance with the present invention. Embodiments of the method are evident from claims 2-9.

More specifically, a method for surface treatment of a tile of compressed fibre material, such as mineral wool, is provided, said tile being intended for use in interior wall systems, suspended ceiling systems or the like, and comprising a front side, intended to be facing a room, a rear side and one or more side edges, said method comprising the steps of: applying a surface layer of paint on the front side of the tile, arranging a surface layer of plastic film on at least one side edge by: heating the plastic film to its melting temperature, applying the plastic film against said at least one side edge and applying a pressure to press either the plastic film against said at least one side edge or said at least one side edge against the plastic film, wherein heating the plastic film and applying pressure are carried out in a single step.

An advantage of the method according to the present invention is that the time required to manufacture a tile is reduced because there are less painted surfaces that need to dry.

Another advantage of the present invention is that the number of manufacturing steps that involve wet tiles is reduced, which facilitates handling of the tile during manufacture.

A further advantage is that a well-defined edge is provided at the transition between the side edge and the front side or the side edge and another side edge. By arranging the plastic film, the risk of a boss or an untreated portion occurring in a transitional portion between the side edge and the front side is reduced, as are the tolerance requirements when treating the side edges.

A still further advantage is that the method makes it possible to facilitate the installation of a ceiling and reduce the time required, since tiles which are cut and whose side edge is provided with a plastic film do not have to dry before mounting.

An additional advantage of the invention is that a tile is obtained for which the risk of blocking is reduced. *Blocking* means that paint applied on the side edge of the tile clings and adheres to surfaces with which the tile comes into contact.

The pressure may be applied by pressing said at least one side edge against an abutment whose surface is provided with a release agent, the advantage thereof being that the plastic film is not likely to cling to the tool, i.e. the abutment, that applies the pressure.

To further reduce the time of manufacture of the tile and to reduce the number of manufacturing steps, heating of the plastic film and application of pressure may be carried out in a single step.

The plastic film may have an area that is larger than the area of said at least one side edge, the step of arranging the plastic film being followed by the step of removing the excess plastic film. This has the advantage of allowing less exacting tolerance requirements in the manufacturing process while still obtaining a higher quality in the transition between the side edge and the front side. The excess plastic film can be removed with a high degree of accuracy, since the part of the plastic film that is not in contact with the side edge is stretched along the transitional portion and is torn or shorn off.

The step of removing the excess plastic film may be carried out simultaneously with the application of pressure, which further reduces the number of manufacturing steps.

The step of removing the excess plastic film may be carried out while the plastic film is in its melted state, which ensures an even higher quality of the transition between the front side and the side edge. It also means that the excess plastic film is removed exactly in the point where the pressure stops. This gives a satisfactory and distinct connection to the surface layers of paint on the front side and adjacent surfaces. It also gives a distinct connection at the corners to previously treated side edges.

The plastic film may be a multi-layer film and the different layers may have different melting temperatures, in which case the plastic film is heated to a temperature corresponding to the melting temperature of one or more of the plastic film layers, i.e. to a temperature at which one or more of the plastic film layers is in the melted state. The advantage of a multi-layer film is that the advantageous properties of different films, such as adhesivity, sound absorption, etc., may be conferred to the tile.

The surface layer of plastic film may be applied on all side edges of the tile.

The step of arranging a surface layer of plastic film on at least one side edge may be carried out separately from the application of a surface layer of paint on the front side of the tile. By foiling the section surfaces of those tiles that are cut in conjunction with mounting instead of painting them, the installation time and costs involved are reduced and the installation is simplified considerably.

The plastic film may comprise a thermoplastic resin, such as polyethylene, polyvinyl chloride and/or polyvinylidene chloride.

To further improve the transition between the front side and the side edges, the applied pressure may be higher along the border portions of the side edge.

### Brief Description of the Drawings

Embodiments of the present invention will be described below for the purpose of exemplification, reference being made to the accompanying drawings.
Fig. 1 is a perspective view of a tile according to the invention and a tool in a first position.
Fig. 2 is a perspective view of a tile according to the invention and a tool in a second position.

### Detailed Description

An embodiment of a method according to the invention and a tile produced by the inventive method will be described below.

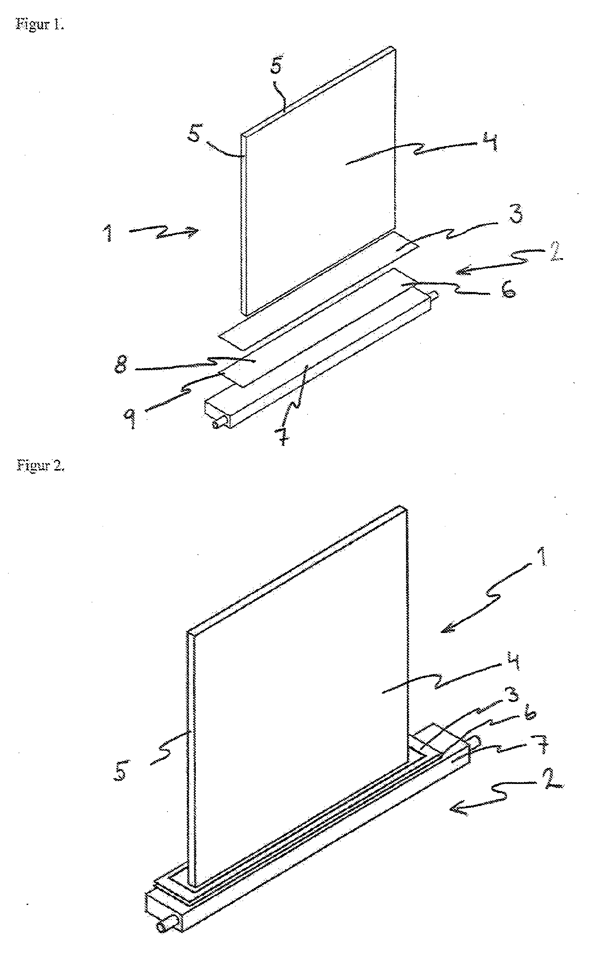

Figs 1 and 2, to which reference is now made, show a tile 1 of a compressed fibre material, such as mineral wool, a tool 2 and a plastic film 3.

The tile 1 comprises a front side 4, a rear side (not shown) and a number of side edges 5. In the embodiment shown, the tile 1 has a square shape. It will be noted, however, that the present invention is not limited to a square-shaped tile 1, but the tile may be of various shapes.

The tile 1 may be an acoustic tile 1 intended to form an acoustic ceiling. The tile 1 may, for example, be a sound absorber with sound-absorbing properties, or the tile 1 may be a sound-insulation element that prevents sound from leaking from one room to another.

The front side 4 of the tile 1 is intended to be oriented inwards toward a room when the tile 1 is arranged in a suspended ceiling or interior wall system. The front side 4 is coated with a paint. The properties of the paint in combination with the surface structure of the front side 4 allows advantageous properties to be conferred to the tile 1 in terms of acoustics, fire and/or light reflection.

The rear side of the tile 1 is intended to be oriented away from the room in which the tile 1 is installed. The rear side may be either untreated or coated with a paint.

The side edges 5 of the tile 1 are arranged between the front 4 and the rear side. The number of side edges 5 depends on the shape of the tile 1; in the example shown the tile 1 has four side edges 5. In their finished state, the side edges 5 have a surface coating in the form of a plastic film 3.

The tool 2 comprises an applicator element 6, a heating element 7 and a pressure means (not shown). The tool 2 is displaceable between a first and a second position.

The applicator element 6 has a shape that corresponds to the shape of the side edge 5 and an area that is larger than the area of the side edge 5. The applicator element 6 is made of a heat-conducting material. The applicator element 6 has a first side 8, which is adapted to be pressed against the plastic film 3 and the tile 1 and a second side 9, which is adapted to be in contact with the heating element 7. The first side 8 may have a surface provided with a release agent, for example polytetrafluoroethylene (PTFE).

The heating element 7 is arranged to generate heat, for example by means of electricity. The heating element 7 has a shape that corresponds to the shape of the side edge 5.

The applicator element 6 may be in the form of a coating of a release agent applied directly onto the heating element 7.

The plastic film 3 has a shape that corresponds to the shape of a side edge 5, or at least to the shape of its border portions, and an area that is larger than the area of the side edge 5. The thickness of the plastic film 3 may be in the range 10-500 µm, preferably 100-200 µm. The plastic film 3 may be a film formed of a thermoplastic resin. The plastic film 3 may consist of a number of different materials, for example polymers such as polyethylene, polyvinyl chloride, and polyvinylidene chloride. The plastic film 3 may comprise one or more layers. In the case where the plastic film 3 is of multi-layer type, it is appropriate for these layers to have different melting temperatures, such that the side facing the side edge 5 of the tile 1 has the lowest melting temperature.

The elements making up the plastic film 3 are selected such that the requirements relating to fire, moisture, fastness to light, structure, colour, and mattness are fulfilled. To avoid static charging, the film 3 may be manufactured with electrically conductive components.

The method for manufacturing a tile 1 according to the invention, in a factory or the like, comprises the following steps.

The fibre material is formed into a large sheet or a continuous web in a previously known manner, which is why this part of the manufacturing process will not be described in more detail in the present application.

The sheet or continuous web is then compressed and cut longitudinally and laterally and across in accordance with prior art to obtain the desired dimensions of the fibre material to be formed into a tile 1. Nor will this part of the manufacturing process be described in more detail in the present application.

One or more layers of paint are then applied on the front side 4 of the tile 1. The paint may be applied, for instance, by spraying the paint onto the tile 1 or by roller-coating the paint onto the tile using a roller. After each application the paint has to dry before an additional layer of paint is applied thereon or, alternatively, before it is processed in the subsequent manufacturing steps. Paint may also be applied on the rear side of the tile. The paint may be applied in various manners and the present invention is not limited to the way the paint is applied on the front side 4 and/or rear side of the tile 1.

A surface layer of a plastic film 3 is applied on the side edges 5 in the following manner. The heating element 7 of the tool 2 is heated. The tool 2 is now in its first position, as illustrated in Fig. 1, and is ready to apply the plastic film 3 on the side edge 5. The pressure means then applies pressure on the tile 1. The tile 1 move under the pressure and its side edge 5 is pressed against the plastic film. The plastic film 3 is tightened and displaced together with the tile so as to be pressed against the applicator element 6 and the heating element 7. The tool 2 is now in its second position, as illustrated in Fig. 2.

The plastic film 3 is heated to its melting temperature by means of the heating element 7. The molten plastic film 3 melts and is pressed into the fibre structure of the tile 5. The plastic film 3 that extends beyond the border portions of the side edge 5 is not pressed against said side edge 5 and, thus, does not abut against anything that could counter the pressure applied thereon. As a result, tension builds in the plastic film 3 as it is being stretched and the heat and pressure cause the plastic film 3 to be shorn or torn off along a well-defined edge where the pressure stops along the borders of the side edge 5. This means that a distinct transition is obtained, for instance, between the side edge 5 and the front side 4. There are no gaps in this transition, nor any bosses caused by double layers of material. In some cases, threading may occur in the plastic film 3 projecting into the air along the shorn or torn edge. However, any such threading is immediately counteracted by the plastic film 3 being in a molten state, which means that it will contract and form a distinct edge. This also allows less exacting tolerance requirements when applying the plastic film 3, as long as the area of the plastic film 3 is larger than that of the side edge 5.

The tool 2 is then returned to its first position, in which it is disengaged from the plastic film 3 and the tile 1. The release agent on the front side of the applicator element 6 prevents the plastic film 3 from clinging to the applicator element 6.

When the heat supply is cut off the plastic film 3 solidifies and binds to the fibres of the tile 1. The plastic film 3 solidifies considerably faster than a paint and the tile 1 may more or less immediately be processed in the next step, for example subjected to packaging or to the application of a plastic film on an additional side edge.

The plastic film 3 may be arranged on rolls in a pre-tensioned position. This allows the plastic film 3 to be moved continuously and to be arranged in a simple manner between the side edge 5 of the tile 1 and the tool 2.

The above manufacturing steps have been described in conjunction with intermittent manufacturing, but may also be carried out continuously.

The method of the present invention is not limited to the manufacturing of tiles 1 in a factory, but may also be used when installing suspended ceiling systems and interior wall systems. When mounting the tiles 1 many of the tiles 1 have to be cut on site. For a room with a surface area of 2 m², for example, approximately 80% of the tiles have to be cut, for a room of 20 m², approximately 43% of the tiles have to be cut and for a room of about 120 m², approximately 21 % of the tiles have to be cut. In addition, holes have to be made in the tiles to accommodate ventilation equipment, lamps and the like.

When mounting the tiles 1 a paint is applied on the front side of the tile in accordance with that described above. A plastic film 3 may also be applied on one or more of the side edges of the tile as described above. In the case where the shape of the tile 1 has to be modified in conjunction with mounting thereof, the tile 1 is cut to the desired shape with a knife or other material-removing means. When the tile 1 is cut a section is laid open forming a new side edge 5 of the tile.

The newly formed side edge 5 may be coated with a plastic film 3 in accordance with that described above. After the plastic film 3 has cooled and solidified, the tile 1 can be handled and mounted straight away. In this way, the advantages of cutting and mounting the tiles 1 in a single step are made available, since the fitter does not have to wait for a paint to dry.

It will be appreciated that the present invention is not limited to the embodiments shown.

The present invention is not limited to performing the step of applying a paint on the front side of the tile before applying a plastic film on a side edge.

The pressure means may be replaced by someone manually applying pressure.

Tiles of the kind described above may also be used as baffles in a room, in which case a paint is applied on both the front side and the rear side. Furthermore, tiles of the kind described above may be intended to form a free-hanging suspended ceiling.

Accordingly, various modifications and variations are conceivable, and therefore the scope of the present invention is exclusively defined by the appended claims.

## Claims

1. A method for surface treatment of a tile (1) of compressed fibre material, such as mineral wool, said tile (1) being intended for use in interior wall systems, suspended ceiling systems or the like, and comprising a front side (4), intended to be facing a room, a rear side and one or more side edges (5), said method being **characterised by** the steps of:
applying a surface layer of a paint on the front side (4) of the tile (1),
arranging a surface layer of a plastic film (3) on at least one side edge (5) by
heating the plastic film (3) to its melting temperature,
applying the plastic film (3) directly against said at least one side edge (5), and
applying pressure to press either the plastic film (3) against said at least one side edge (5) or said at least one side edge (5) against the plastic film (3),
wherein heating the plastic film (3) and applying pressure are carried out in a single step.

2. A method according to claim 1, wherein the pressure is applied by pressing said at least one side edge (5) against an abutment (2) whose surface is provided with a release agent.

3. A method according to any one of the preceding claims, wherein the plastic film (3) has an area that is larger than the area of said at least one side edge (5) and wherein the steps of arranging the plastic film (3) is followed by the step of removing the excess plastic film (3).

4. A method according to claim 3, wherein the step of removing the excess plastic film (3) is carried out simultaneously with the application of pressure.

5. A method according to any one of the preceding claims, wherein the plastic film (3) is a multi-layer film and the different layers have different melting temperatures, the plastic film (3) being heated to a temperature corresponding to the melting temperature of one or more of the layers of the plastic film (3).

6. A method according to any one of the preceding claims, wherein a surface layer of plastic film (3) is applied on all side edges (5) of the tile (1).

7. A method according to any one of the preceding claims, wherein the step of arranging a surface layer of the plastic film (3) on at least one side edge (5) is carried out separately from the application of a surface layer of paint on the front side (4) of the tile (1).

8. A method according to any one of the preceding claims, wherein the plastic film (3) comprises a thermoplastic resin, such as polyethylene, polyvinyl chloride and/or polyvinylidene chloride.

9. A method according to any one of the preceding claims, wherein the applied pressure is higher along the border portions of said at least one side edge (5).

## Patentansprüche

1. Verfahren zur Oberflächenbehandlung einer Platte (1) aus verdichtetem Fasermaterial, wie beispielsweise Mineralwolle, wobei die Platte (1) dafür vorgesehen ist, in Innenwandsystemen, Deckenabhängungssystemen oder dergleichen verwendet zu werden und sie eine Vorderseite (4), die dafür vorgesehen ist, einem Raum zugewandt zu sein, eine Rückseite und eine oder mehrere Seitenkanten (5) umfasst, wobei das Verfahren durch folgende Schritte gekennzeichnet ist:
Aufbringen einer Oberflächenschicht aus einer Farbe auf der Vorderseite (4) der Platte (1),
Anordnen einer Oberflächenschicht aus einer Kunststofffolie (3) auf mindestens einer Seitenkante (5) durch:
Erwärmen der Kunststofffolie (3) auf deren Schmelztemperatur,
Aufbringen der Kunststofffolie (3) direkt an mindestens der einen Seitenkante (5) und
Aufbringen von Druck, um entweder die Kunststofffolie (3) an die mindestens eine Seitenkante (5) oder die mindestens eine Seitenkante (5) an die Kunststofffolie (3) zu pressen,
wobei das Erwärmen der Kunststofffolie (3) und das Aufbringen von Druck in einem einzigen Schritt ausgeführt werden.

2. Verfahren nach Anspruch 1, wobei der Druck durch Pressen der mindestens einen Seitenkante (5) gegen eine Anlagefläche (2) aufgebracht wird, deren Oberfläche mit einem Trennmittel versehen ist.

3. Verfahren nach einem der vorhergehenden Ansprüche, wobei die Kunststofffolie (3) eine Fläche aufweist, der größer als die Fläche der mindestens einen Seitenkante (5) ist, und wobei dem Schritt des Anordnens der Kunststofffolie (3) der Schritt des Entfernens der überschüssigen Kunststofffolie (3) folgt.

4. Verfahren nach Anspruch 3, wobei der Schritt des Entfernens der überschüssigen Kunststofffolie (3) gleichzeitig mit dem Aufbringen von Druck ausgeführt wird.

5. Verfahren nach einem der vorhergehenden Ansprüche, wobei die Kunststofffolie (3) eine mehrschichtige Folie ist und die verschiedenen Schichten unterschiedliche Schmelztemperaturen aufweisen, wobei die Kunststofffolie (3) auf eine Temperatur erwärmt wird, die der Schmelztemperatur einer oder mehrerer der Schichten der Kunststofffolie (3) entspricht.

6. Verfahren nach einem der vorhergehenden Ansprüche, wobei auf alle Seitenkanten (5) der Platte (1) eine Oberflächenschicht aus Kunststofffolie (3) aufgebracht wird.

7. Verfahren nach einem der vorhergehenden Ansprüche, wobei der Schritt des Anordnens einer Oberflächenschicht aus der Kunststofffolie (3) auf mindestens einer Seitenkante (5) getrennt vom Aufbringen einer Oberflächenschicht aus Farbe auf der Vorderseite (4) der Platte (1) ausgeführt wird.

8. Verfahren nach einem der vorhergehenden Ansprüche, wobei die Kunststofffolie (3) ein thermoplastisches Harz umfasst, wie beispielsweise Polyethylen, Polyvinylchlorid und/oder Polyvinylidenchlorid.

9. Verfahren nach einem der vorhergehenden Ansprüche, wobei der aufgebrachte Druck entlang den Randabschnitten der mindestens einen Seitenkante (5) höher ist.

## Revendications

1. Procédé de traitement surfacique d'un carreau (1) en matériau fibreux compressé comme de la laine minérale, ledit carreau (1) étant destiné à être utilisé dans des systèmes de murs intérieurs, des systèmes de plafonds ou similaires et comprenant une face frontale (4) destinée à être tournée vers une pièce, une face arrière et un ou plusieurs bords latéraux (5), ledit procédé étant **caractérisé par** les étapes consistant à :
appliquer une couche surfacique de peinture sur la face frontale (4) du carreau (1),
disposer une couche surfacique de film plastique (3) sur au moins un bord latéral (5) et
chauffer le film plastique (3) à sa température de fusion,
appliquer le film plastique (3) directement contre ledit au moins un bord latéral (5) et
appliquer de la pression pour comprimer soit le film plastique (3) contre ledit au moins un bord latéral (5), soit ledit au moins un bord latéral (5) contre le film plastique (3),
dans lequel le chauffage du film plastique (3) et l'application de pression sont réalisés en une seule étape.

2. Procédé selon la revendication 1, dans lequel la pression est appliquée en comprimant ledit au moins un bord latéral (5) contre une butée (2) dont la surface est pourvue d'un agent de détachement.

3. Procédé selon l'une quelconque des revendications précédentes, dans lequel le film plastique (3) a une surface qui est supérieure à la surface dudit au moins un bord latéral (5) et l'étape de disposition du film plastique (3) est suivie par l'étape de retrait du film plastique excédentaire (3).

4. Procédé selon la revendication 3, dans lequel l'étape de retrait du film plastique excédentaire (3) est réalisée en même temps que l'application de pression.

5. Procédé selon l'une quelconque des revendications précédentes, dans lequel le film plastique (3) est un film multicouches et les différentes couches ont des températures de fusion différentes, le film plastique (3) étant chauffé à une température correspondant à la température de fusion d'une ou plusieurs couches de film plastique (3).

6. Procédé selon l'une quelconque des revendications précédentes, dans lequel une couche surfacique de film plastique (3) est appliquée sur tous les bords latéraux (5) du carreau (1).

7. Procédé selon l'une quelconque des revendications précédentes, dans lequel l'étape de disposition d'une couche surfacique de film plastique (3) sur au moins un bord latéral (5) est réalisée séparément de l'application d'une couche surfacique de peinture sur la face frontale (4) du carreau (1).

8. Procédé selon l'une quelconque des revendications précédentes, dans lequel le film plastique (3) contient une résine thermostatique comme du polyéthylène, du chlorure de polyvinyle et/ou du chlorure de polyvinylidène.

9. Procédé selon l'une quelconque des revendications précédentes, dans lequel la pression appliquée est plus élevée le long des zones limites de l'au moins un bord latéral (5).
